# EUROPÄISCHE PATENTSCHRIFT

(11) **EP 2 330 256 B1**
(45) Veröffentlichungstag und Bekanntmachung des Hinweises auf die Patenterteilung: **01.05.2019**
(21) Anmeldenummer: 10015349.3
(22) Anmeldetag: 07.12.2010
(51) Int. Cl.: E04D 1/18, E04D 1/20, E04D 1/30, H02S 20/25, F24S 80/00, F24S 25/613, F24S 25/60, E04D 13/10, E04D 13/12

(54) **Dachpfanne mit einem variabel positionierbaren Befestigungselement für Dachaufbauten**
Roof tile with a variable fixing element for roof attachments
Tuile de toit dotée d'un élément de fixation positionnable de manière variable pour structures placées sur le toit

(30) Priorität: 07.12.2009 DE 202009016504 U
(43) Veröffentlichungstag der Anmeldung: 08.06.2011
(73) Patentinhaber: Kaltner, Josef, 83052 Bruckmühl (DE)
(72) Erfinder: Kaltner, Josef, 83052 Bruckmühl (DE)

(56) Entgegenhaltungen:
- EP-A2- 1 845 319
- AT-A4- 506 230
- DE-A1- 10 344 202
- DE-A1-102005 059 487
- JP-A- H08 144 453
- JP-A- 2004 027 843
- JP-A- 2004 278 110
- JP-A- 2006 089 978

## Beschreibung

Die vorliegende Erfindung betrifft eine Dachpfanne mit einem auf ihrer äußeren Oberfläche entlang der x-Achse oder entlang der x-Achse und der y-Achse frei variabel und reversibel positionierbaren Befestigungselement für Dachaufbauten, welches nach der Positionierung mittels Verbindungselementen ortsfest verankerbar ist, mit den im Oberbegriff des Patentanspruches 1 angegebenen Merkmalen,

Aus dem Stand der Technik ist es bekannt, für die Aufdach-Montage von auf einem geneigten Gebäudedach zu montierenden Dachzubehörelementen - beispielsweise Solarmodulen zur elektrischen Energieerzeugung und/oder zur Brauchwassererwärmung - "Dachhaken" oder "Sparrenanker" zu verwenden.

Hierbei dient in der Regel eine rechteckige, längliche Ankerplatte zur Befestigung an einem Dachsparren einer Dachkonstruktion mittels Holzschrauben. Die Längsachse dieser rechteckigen Ankerplatte ist horizontal ausgerichtet und verläuft in einem rechten Winkel zu der Längsachse des die jeweilige Ankerplatte tragenden Sparrens der Dachkonstruktion.

In der Mitte der Länge des in der Gebrauchsstellung traufenseitigen Randes der horizontal ausgerichteten Ankerplatte ist ein etwa 10 cm hoher Abstandhalter-Vorsprung vorgesehen, welcher - bei einer seitlichen Betrachtung des Dachhakens - rechtwinklig zu der Ankerplatte ausgerichtet ist und nach oben ragt.

An dem nach oben zeigenden, freien Ende des Abstandhalter-Vorsprunges ist der längere, freie Schenkel eines Bügels angebracht, dessen Form - bei einer seitlichen Betrachtung - im wesentlichen einem zur Seite gekippten Buchstaben "U" mit verschieden langen Schenkeln entspricht, dessen Öffnung firstwärts in Richtung der Ankerplatte und dessen Boden in Richtung der Traufe des Daches weisen.

Der kürzere, obenliegende freie Schenkel des im wesentlichen u-förmigen Bügels trägt eine längslochartige Aussparung zur Anbringung beispielsweise von Trägerprofilen für Solarmodule.

Dieser aus dem Stand der Technik bekannte Dachhaken beziehungsweise Sparrenanker ist in vielerlei Hinsicht nachteilig:
Zunächst ist dort eine besonders zeitintensive, mühsame und überdies die Stabilität schwächende Bearbeitung des traufenseitigen Randes der firstseitig den von der Ankerplatte rechtwinkelig abstehenden Abstandhalter-Vorsprung überdeckenden Dachpfanne mit einem Trennschleifer zur ausschneidenden Schaffung einer Durchtrittsöffnung für den Abstandhalter-Vorsprung erforderlich.

Des weiteren kann eine nicht unerhebliche Gewichtsbelastung - beispielsweise durch Schnee und/oder Wind - der Solarmodule zu Dauerhaltbarkeitsproblemen führen, da der von dem Abstandhalter-Vorsprung traufenwärts ausgehende, parallel zur Dachoberfläche verlaufende, längere Abschnitt des im wesentlichen u-förmigen Bügels sich federnd nachgebend, zumindest abschnittsweise, auf der Oberkante der traufenseitig von der Ankerplatte des jeweiligen Dachhakens vorgesehenen Dachpfanne abstützt.
Dies kann zu unzulässig hohen Belastungen und zu Brüchen dieser meist spröden Dachpfanne führen.

Die aus dem Stand der Technik bekannten Dachhaken oder Sparrenanker sind ferner auch deswegen nachteilig, weil sie aufgrund von zahlreichen [vier (!)] Kraftumlenkungspunkten lediglich über eine sehr geringe Biege-Steifigkeit verfügen und daher dicke Wandstärken und somit den besonders umfangreichen Einsatz von Material zur Erreichung einer zumindest gewissen Biege-Steifigkeit erfordern.

Da die flache, für die Unterfassung des u-förmigen Bügels am ehesten geeignete Stelle der traufenseitig von dem bekannten Dachhaken vorgesehenen Dachpfanne meist nicht zentrisch über der Sparrenmitte sitzt, muss der bekannte Dachhaken gegenüber der Mitte des Sparrens in der Regel seitlich versetzt vorgesehen werden.

Für diese seitlich versetzte Montage des bekannten Hakens ist dort eine Ankerplatte mit einer in besonderem Maße ausgeprägten horizontalen Länge erforderlich, wobei in der Gebrauchsstellung die Längsachse dieser Ankerplatte horizontal und damit rechtwinklig zur Längsachse des die Ankerplatte tragenden Sparrens ausgerichtet ist.

In Abhängigkeit von der Oberflächenkontur der traufenseitig befindlichen Dachplatte ist dort also zur Erreichung der erforderlichen Verwindungssteifigkeit eine im besonderem Ausmaße materialintensiv und dickwandig ausgestaltete und damit besonders kostenintensive Ankerplatte notwendig.

Ein weiterer Nachteil der aus dem Stand der Technik bekannten Dachhaken beziehungsweise Sparrenanker ist in deren ausgeprägtem Zeitaufwand für die Montage zu sehen.

Denn es müssen dort zunächst große Teile des Daches abgedeckt, einzelne Dachpfannen aussparend bearbeitet, Bearbeitungs-Dreck aus der Dachrinne entfernt, die Dachhaken einzeln verschraubt, die Dachpfannen wieder aufgebracht und anschließend Reinigungsarbeiten am Dach und am Boden zur Entfernung von Dachplatten-Splittern durchgeführt werden.

Aus der DE 10 2005 059487 A1 ist eine Dachpfanne mit einem Halterungssystem bekannt. Das Halteelement ist aber nicht entlang einer Führungsschiene seitwärts verschiebbar.

Aus der JP 2004 027843 A ist es bekannt, einen sockelartigen Träger-Vorsprung auf der Oberfläche eines Dachziegels ortsfest - das heißt nicht verschiebbar - anzubringen. Auf diesem Träger-Vorsprung ist ein Montage-Aufsatz befestigbar, wobei der Montage-Aufsatz nur gegenüber dem ortsfesten Träger-Vorsprung in sehr geringem Ausmaße verschiebbar ist.

Das Ausmaß der Verschiebbarkeit ist dort sehr gering und begrenzt wegen der Beschränktheit der Verschiebbarkeit des Montageaufsatzes auf die Breite des in seinem unteren Trägerteil vorgesehenen Längsschlitzes und wegen der ortsfesten Anbringung des Träger-Vorsprunges im Zentrum des dortigen Dachziegels.

Aufgabe der vorliegenden Erfindung ist daher die Bereitstellung einer Dachpfanne mit einem auf deren äußerer Oberfläche anbringbaren Befestigungselement für Dachaufbauten, welche eine besonders ausgeprägte Verschiebbarkeit des Montage-Aufsatzes und dadurch eine Verbesserung der Positionierung von Dachaufbauten gestattet, welche eine besonders schnelle, einfache und bequeme Montage gestattet, welche Dauerhaltigkeitsprobleme nicht kennt, bei welcher sich kein Bauteil auf der traufenseitig vorgesehenen Dachpfanne selbst bei ausgeprägter Gewichtsbelastung abstützt und dadurch einen Bruch dieser Dachpfanne bewirken kann, welche das Problem einer zu geringen Biegesteifigkeit einer Ankerplatte und/oder des Dachhakens wegen zu vieler Kraftumlenkungspunkte nicht kennt, deren Dachhaken im Vergleich zu dem Dachhaken des Standes der Technik bei gleicher Belastungsfähigkeit einen deutlich geringeren Materialeinsatz erfordern und schon deshalb erheblich kostengünstiger herstellbar sind, welche eine spezielle, aufwendige Montage und/oder eine besonders lange und folglich materialintensive und kostenintensive Ausbildung einer Ankerplatte selbst im Falle eines nicht-zentrischen Sitzes der Dachpfanne über der Sparrenmitte nicht erfordert und deren Montage mühsame und zeitintensive Reinigungsarbeiten am Dach und am Boden zur Entfernung von Dachpfannen-Splittern nicht zur Folge hat.

Erfindungsgemäß wird diese Aufgabe bei einer gattungsgemäßen Dachpfanne durch die im kennzeichnenden Teil des Patentanspruches 1 angegebenen Merkmale gelöst. Besonders bevorzugte Ausführungsformen sind Gegenstand der Unteransprüche.

Ausführungsbeispiele der Erfindung werden anhand der Zeichnungen näher beschrieben. Es zeigen:
Figur 1 eine schematische, perspektivische Ansicht einer erfindungsgemäßen Dachpfanne, bei welcher das Befestigungselement zunächst entlang einer Führungsschiene in x-Richtung variabel -zur Ausrichtung des Befestigungselementes exakt über der Sparrenmitte - reversibel positionierbar und anschließend durch durch die Aussparungen des Befestigungselementes geführte Verbindungselemente auf der äußeren Oberfläche des mittleren Abdeckbereiches der Dachpfanne (1) und an einem oder mehreren tragenden Bauteilen der Dachkonstruktion ortsfeste anbringbar ist;
Figur 2 eine schematische, perspektivische Ansicht einer erfindungsgemäßen Dachpfanne gemäß Figur 1 von schräg unten;
Figur 3 einen schematischen Querschnitt durch eine erfindungsgemäße Dachpfanne, wobei das Befestigungselement im Kreuzungspunkt einer Dachlatte und eines auf einer Pfette aufliegenden Sparrens mittels einer durch das Befestigungselement und die Dachpfanne verlaufenden Verbindungselement verankert ist;

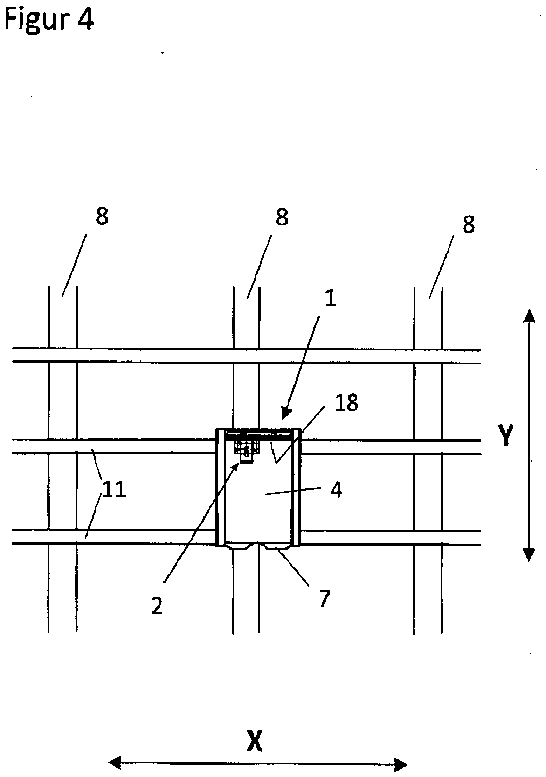

Figur 4 eine schematische Draufsicht auf eine erfindungsgemäße Dachpfanne, deren Befestigungselement über einem unterhalb der linken Seite des mittleren Abdeckbereiches der Dachpfanne verlaufenden Sparren vorgesehen ist;

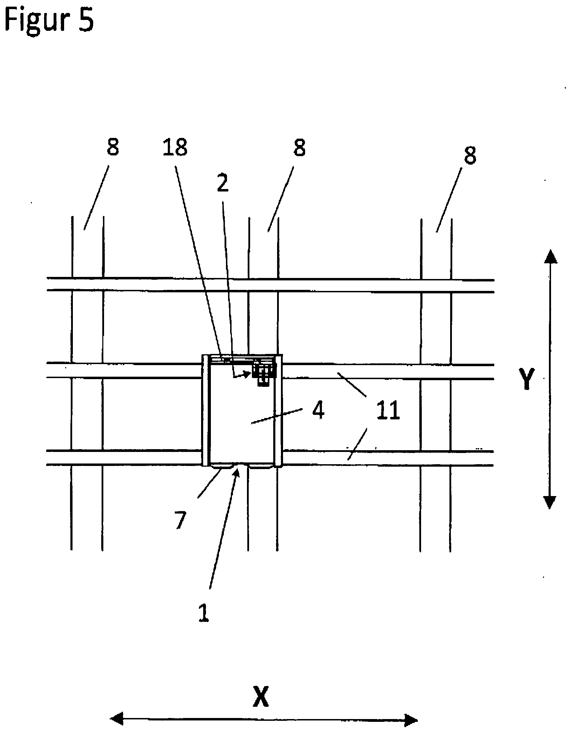

Figur 5 eine schematische Draufsicht auf eine erfindungsgemäße Dachpfanne, deren Befestigungselement über einem unterhalb der rechten Seite des mittleren Abdeckbereiches der Dachpfanne verlaufenden Sparren vorgesehen ist;
Figur 6 eine schematische, perspektivische Ansicht eines die Bohrbereiche der Verbindungselemente in der Dachlatte verstärkenden Dachlatten-Verstärkung;
Figur 7 eine schematische, perspektivische Ansicht eines Befestigungselementes der erfindungsgemäßen Dachpfanne, dessen firstseitige, dachpfannenseitige Enden zum reversiblen Eingriff durch Einhängen in eine x-Achsen-Führungsschiene etwas nach oben aufgebogen sind.

Gegenstand der vorliegenden Erfindung ist eine Dachpfanne (1) mit einem oder mehreren auf deren äußerer Oberfläche anbringbaren Befestigungselementen (2) für Dachaufbauten.

Unter dem Begriff "Dachaufbauten" sind beispielsweise Solarmodule, Solarkollektoren, Photovoltaikmodule, Dachzubehörelemente, Schneefanggitter, Dachsteigtritte, andere Elemente oder Gestelle, Träger oder Schienen-Systeme beziehungsweise Profil-Systeme hierfür zu verstehen.

Erfindungsgemäß ist das Befestigungselement (2) auf der äußeren Oberfläche des mittleren Abdeckbereichs (4) der Dachpfanne (1) entlang der x-Achse - und damit seitlich - oder entlang der x-Achse und entlang der sich in First-Traufe-Richtung erstreckenden y-Achse an beliebiger Position reversibel oder irreversibel positionierbar.

Im Anschluss an die optimale Positionierung des Befestigungselementes (2) - beispielsweise über der Mitte eines Sparrens (8) - ist das Befestigungselement (2) beispielsweise durch eine oder mehrere Verbindungselemente (25), welche auch die Dachpfanne (1) durchragen, an einem oder mehreren tragenden Teilen einer Dachunterkonstruktion - beispielsweise an einem Sparren (8) - ortsfest anbringbar.

Unter dem Begriff "Dachunterkonstruktion" ist in der Regel ein längs zur Dachneigung in First-Trauf-Richtung verlaufender Sparren (8) zu verstehen, welcher meist als tragendes Teil des Daches dient und zu einem wesentlichen Teil die Dachlast aufnimmt und in die Gebäudewände einleitet.

In der Regel sind an den Sparren (8), welche auf einer oder mehrerer Pfetten ruhen, in regelmäßigen Abständen horizontal verlaufende Dachlatten (11) angebracht.

An jeweils einer Kreuzungsstelle einer solchen Dachlatte (11) mit einem Sparren (8) kann die erfindungsgemäße Dachpfanne (1) - beispielsweise mittels einer oder mehrerer Verbindungselemente (25) - verankert sowie rutschsicher befestigt werden.

In der erfindungsgemäßen Dachpfanne (1) liegt die Breite (23) des mittleren Abdeckbereichs (4) der Dachpfanne (1) im Bereich von 60 % bis 97 % der Gesamtbreite (24) der Dachpfanne (1).

Erfindungsgemäß ist der mittlere Abdeckbereich (4) der Dachpfanne (1) - bei Betrachtungen entlang der x-Achse und der y-Achse - eben, glatt und gerade ausgebildet.

Erfindungsgemäß sind die beiden seitlichen Randbereiche (5) der erfindungsgemäßen Dachpfanne (1) - zur Gewährleistung einer problemlosen Austauschbarkeit gegen eine bereits vorhandene Dachpfanne - durch Falzung oder Bördelung derart ausgestaltet, dass sie den seitlichen Randbereich herkömmlicher Dachpfannen korrespondierend nachempfunden sind.

Ein Vorteil der problemlosen Austauschbarkeit der erfindungsgemäßen Dachpfanne (1) gegen eine bereits vorhandene, herkömmliche Dachpfanne besteht darin, dass das aus dem Stand der Technik gefürchtete Ausschlagen und/oder Klopfen und/oder Schleifen von Dachpfannen entfällt. Auf diese Art und Weise wird die Entstehung von Staub effektiv vermieden. Auch die Ablagerung von Dreck in den Dachrinnen tritt nicht auf. Vorteilhaft ist des Weiteren, dass die erfindungsgemäße Dachpfanne (1) die Gefahr eines Bruches von Dachpfannen beim Ausklopfen nicht kennt.

Ein weiterer Vorteil der problemlosen Austauschbarkeit der erfindungsgemäßen Dachpfanne (1) gegen eine bereits vorhandene, herkömmliche Dachpfanne ist darin zu sehen, dass wieder Reserve-Dachpfannen für freie Dachflächen zur Verfügung stehen.

Die Dachpfanne (1) kann beispielsweise eine Dachpfanne aus Metall oder Kunststoff oder aus einem anderen geeigneten Werkstoff sein, welche an vorhandene Dacheindeckungselemente aus Ziegel, Beton oder Stein angepasst und zu diesen kompatibel ist. Die erfindungsgemäße Dachpfanne (1) kann somit auf einfache Art und Weise gegen eine vorhandene Dachpfanne ausgetauscht und als Anbringungselement für eine Dachaufbaute dienen.

Die Konturen der erfindungsgemäßen Dachpfanne (1) können beispielsweise den Konturen einer Frankfurter Dachpfanne, einer Biberschwanz-Dachpfanne, einer Tegalit-Dachpfanne, einer flachen Bitumendach-Abdeckung, einer Falzziegel-Dachpfanne oder einer Flachdach-Pfanne nachempfunden sein.

Im Allgemeinen weist die Dachpfanne eine die Kontur der umgebenden Dacheindeckungselemente nachempfindende Kontur und/oder Oberflächengestaltung und/oder Farbgebung auf.

In besonders bevorzugten Ausführungsformen der erfindungsgemäßen Dachpfanne (1) kann diese beispielsweise aus Aluminium gefertigt sein. Ein besonderer Vorteil der Fertigung der erfindungsgemäßen Dachpfannen (1) aus Aluminium besteht darin, dass diese auch das Problem einer Spannungskorrosion nicht kennen.

Ein weiterer Vorteil der Fertigung der erfindungsgemäßen Dachpfannen (1) aus Aluminium ist darin zu sehen, dass sie im Vergleich zu aus dem Stand der Technik bekannten verzinkten Solar-Unterlegplatten wesentlich beständiger sind und nicht rosten. Die aus dem Stand der Technik bekannten Unterlegplatten sind nach der Montage in der Regel nicht mehr zugänglich. Daher ist bei einer geplanten Nutzungsdauer von über 25 Jahren der Werkstoff Aluminium die bessere Wahl.

Selbstverständlich ist es jedoch möglich, die erfindungsgemäße Dachpfanne (1) aus Metallblech herzustellen, beispielsweise aus verzinktem Stahlblech, welche mittels eines Tiefziehvorganges und/oder eines einfachen Umformungsvorganges in die gewünschte Kontur gebracht sein können.

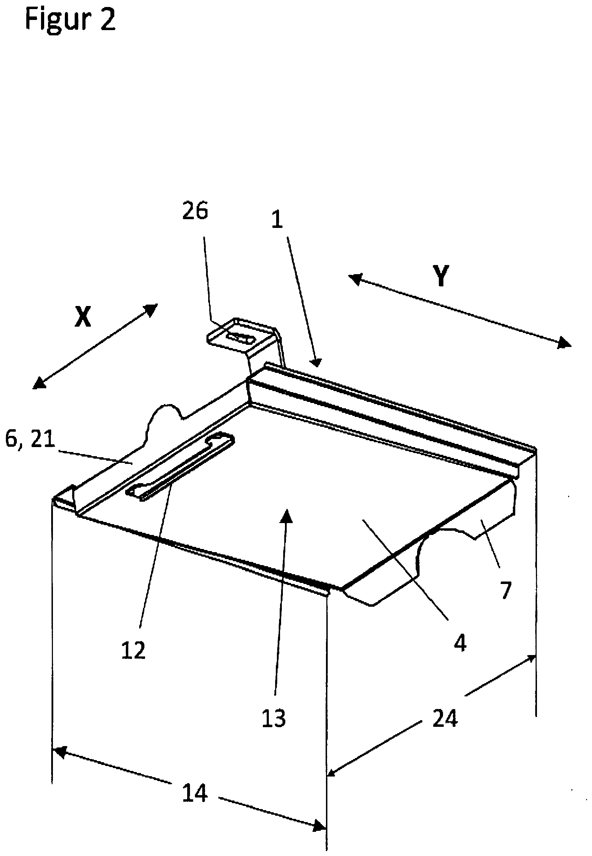

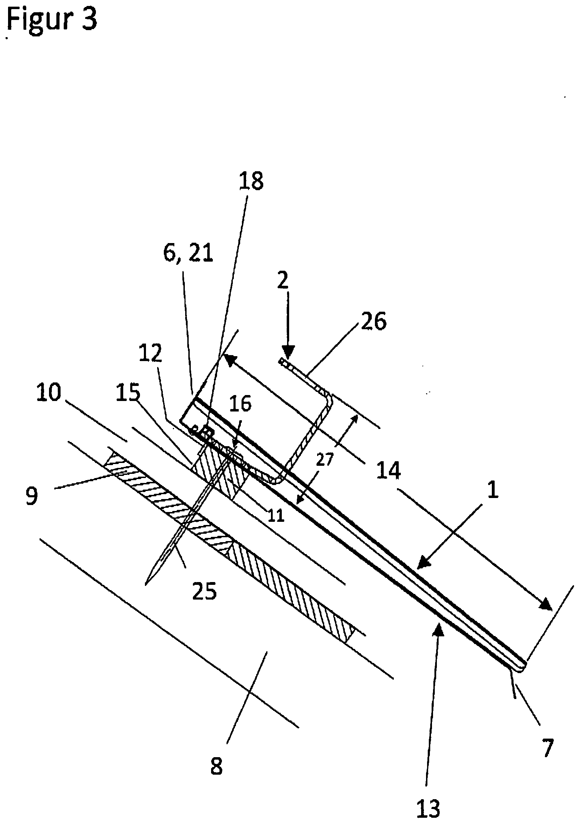

Wie insbesondere aus den Figuren 2 und 3 hervorgeht, kann auf der Unterseite (13) sowie im oberen Drittel der Gesamtlänge (14) der Dachpfanne (1) eine sich vollständig oder abschnittsweise über die Gesamtbreite (24) der Dachpfanne (1) erstreckende und parallel zur x-Achse verlaufende Positionierhilfe (12) zum mittelbaren oder unmittelbaren Einhängen der Dachpfanne (1) an der oberen Außenkante (15) einer Dachlatte (11) ortsfest vorsehbar sein.

Die Positionierhilfe (12) kann beispielsweise in Form einer rückseitig vorstehenden Becher-Blindniete ausgebildet sein, mit deren Hilfe die erfindungsgemäße Dachpfanne (1) an einer Dachlatte (11) angeschlagen werden kann. Ein separates Ausrichten eines Dachhakens entfällt im Falle der erfindungsgemäßen Dachpfanne (1).

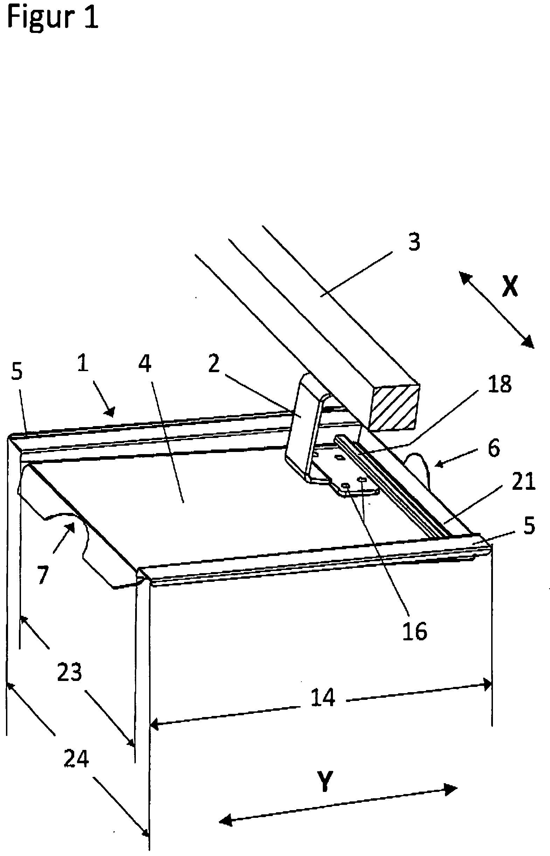

Insbesondere die Figur 1 zeigt, dass die erfindungsgemäße Dachpfanne (1) einen entlang der x-Achse ebenen und geraden mittleren Abdeckbereich (4) umfassen kann.

Die beiden seitlichen Ränder (5) sowie der obere Rand (6) und/oder der untere Rand (7) der erfindungsgemäßen Dachpfanne (1) können - zur Anpassung der erfindungsgemäßen Dachpfanne (1) an die Randbereiche von benachbarten Dachpfannen - beispielsweise jeweils einfach oder mehrfach gefalzt, geprägt, gewölbt, gekrümmt, gebogen und/oder ausgeschnitten sein.

Das erfindungsgemäß verwendete Befestigungselement (2) kann beispielsweise in der Form eines mehrfach oder einfach abgewinkelten Hakenelementes ausgebildet sein, auf welchem eine Dachaufbaute aufliegt, beziehungsweise an welchem eine Dachaufbaute mittelbar oder unmittelbar befestigbar ist.

In besonders bevorzugten Ausführungsformen der erfindungsgemäßen Dachpfanne (1) kann - gemäß den Figuren 1, 3 und 7 - die Form des Befestigungselementes (2) - bei seitlicher Betrachtung in Gebrauchsstellung - jedoch einem zur Seite gekippten Buchstaben "U" entsprechen, dessen Öffnung in Richtung des Dach-Firstes ausgerichtet ist.

Alternativ hierzu kann die Form des Befestigungselementes (2) bei seitlicher Betrachtung einem Buchstaben "L" oder einem Buchstaben "C" entsprechen.

Ein Vorteil des erfindungsgemäß zum Einsatz kommenden, solchen Befestigungselementes (2) liegt darin, dass es eine im Vergleich zu herkömmlichen Dachhaken oder Sparrenankern deutlich kürzere Länge in y-Richtung und weniger Kraftumlenkungspunkte aufweist und somit eine deutlich verbesserte Lasteinleitung bei erhöhter Biegesteifigkeit ermöglicht.

In der Regel kann das Befestigungselement (2) beispielsweise aus verzinktem Stahl, Aluminium, Edelstahl (V2A) oder Kunststoff gefertigt sein.

In besonders bevorzugten Ausführungsformen der erfindungsgemäßen Dachpfanne (1) kann der dem mittleren Abdeckbereich (4) der Dachpfanne (1) zugewandte Abschnitt des Befestigungselementes (2) oder eine an diesem Abschnitt des Befestigungselementes (2) angebrachte Montageplatte (22) eine oder mehrere Aussparungen (16) zur Hindurchführung eines oder mehrerer zu der tragenden Dachunterkonstruktion reichenden Verbindungselementen (25) aufweisen.

Insbesondere den Figuren 2, 3 und 7 ist zu entnehmen, dass der dem mittleren Abdeckbereich (4) der Dachpfanne (1) abgewandte Abschnitt des Befestigungselementes (2) eine oder mehrere Aussparungen (26) zur Anbringung von Dachaufbauten und/oder Dachzubehörelementen aufweisen kann.

In besonders bevorzugten Ausführungsformen der erfindungsgemäßen Dachpfanne (1) können die geometrischen Schwerpunkte der Aussparungen (16) und der einen oder der mehreren Aussparungen (26) - bei seitlicher Betrachtung in der Gebrauchsstellung - exakt einander gegenüberliegen oder zueinander geringfügig versetzt sein.

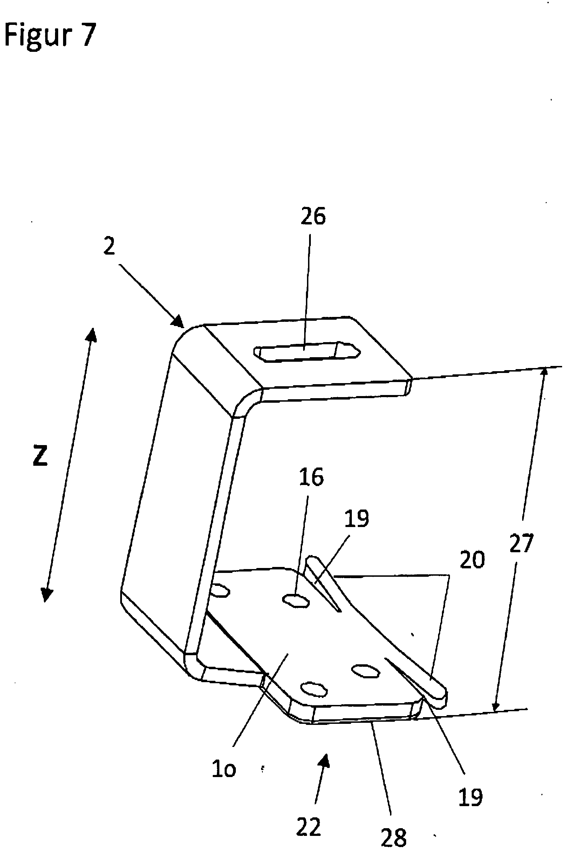

Insbesondere die Figur 7 zeigt, dass die Unterseite des dem mittleren Abdeckbereich (4) der Dachpfanne (1) zugewandten Abschnittes des Befestigungselementes (2) oder der Montageplatte (22) des Befestigungselementes (2) ein pastöses, mattenförmiges, streifenförmiges oder punktförmiges Flüssigkeits-Dichtmaterial oder -mittel (28) tragen kann.

In besonders bevorzugten Ausführungsformen der erfindungsgemäßen Dachpfanne (1) kann - zum Schutz vor Regenwasser, Schnee und Tropfwasser - oberhalb von der oder den Aussparungen (16) des Befestigungselementes (2) oder der Montageplatte (22) des Befestigungselementes (2) für die eine oder die mehreren Verbindungselemente (25) eine ein- oder mehrteilige Abdeckplatte vorsehbar sein, welche den oder die Köpfe der Verbindungselemente (25) überdeckt.

Diese Abdeckplatte kann beispielsweise an dem Befestigungselement (2) und/oder an der Dachpfanne (1) und/oder an dem mittleren Abdeckbereich (4) der Dachpfanne (1) und/oder an der sich parallel zur x-Achse erstreckenden Führungsschiene (18) für das Befestigungselement (2) und/oder an dem sich parallel zur x-Achse erstreckenden Anschlagelement für das Befestigungselement (2) reversibel oder irreversibel anbringbar sein.
Alternativ hierzu kann die Abdeckplatte einen Bestandteil der Dachpfanne (1) darstellen.

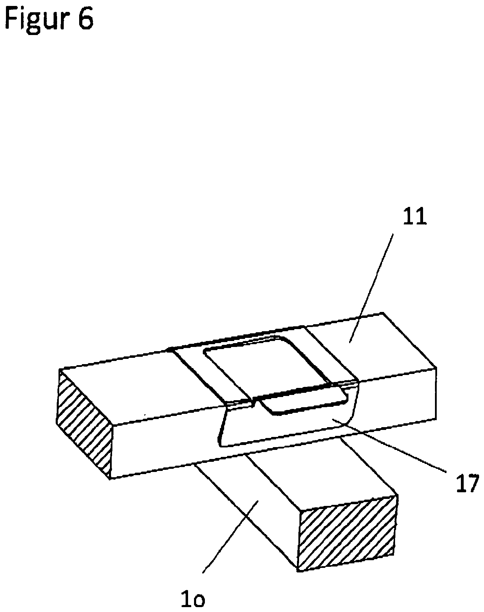

Wie die Figur 6 zeigt, kann im Falle der erfindungsgemäßen Dachpfanne (1) der zur Anbringung der Dachpfanne (1) vorgesehene Bereich der Dachlatte (11) eine Verstärkung (17) tragen, welche zumindest die beiden Kanten der Dachlatte (11) zwischen der Oberseite der Dachlatte (11) einerseits und der firstwärtigen Außenseite der Dachlatte (11) und der traufenseitigen Außenseite der Dachlatte (11) andererseits überdeckt.

Diese Verstärkung (17) kann insbesondere zum Schutz der Dachlatte (11) vor einer Beschädigung durch die Verbindungselemente (25) sowie zur Verbesserung des Aufsitzens der Positionierhilfe (12) auf der oberen, firstseitigen Außenkante (15) der Dachlatte (11) dienen.

In besonders bevorzugten Ausführungsformen der erfindungsgemäßen Dachpfanne (1) kann die Verstärkung (17) des Weiteren Querkräfte aufnehmen, welche ansonsten auf die Dachlatte (11) der Dachunterkonstruktion einwirken würden und diese in Abhängigkeit von Belastungsverhältnissen gegebenenfalls überlasten könnten. Die Verstärkung (17) umkleidet die Dachlatte (11) in der Regel und sorgt gegebenenfalls für eine bessere Verteilung der auftretenden Belastungskräfte, insbesondere der Biegebelastungen. Die Verstärkung (17) kann auch zur Übertragung der über das Befestigungselement (2) aufgenommenen und in das Dach einzuleitenden Lasten auf das tragende Bauteil der Dachunterkonstruktion, insbesondere auf einen Sparren (8), dienen.

Vorzugsweise kann die Verstärkung (17) die Dachlatte (11) in dem Auflagebereich der Dachpfanne (1) vollständig oder abschnittsweise oder käfigförmig durchbrochen ummanteln.

In besonders bevorzugten Ausführungsformen der erfindungsgemäßen Dachpfanne (1) kann die Höhe (27) des Befestigungselementes (2) aufgrund einer mehrteiligen Ausbildung des Befestigungselementes (2) in z-Richtung reversibel verstellbar sein.

Wie insbesondere den Figuren 1 und 3 zu entnehmen ist, wird im Falle der erfindungsgemäßen Dachpfanne (1) - zur entlang der x-Achse variablen Positionierung des Befestigungselementes (2) auf der Oberseite des mittleren Abdeckbereiches (4) der Dachpfanne (1) - das firstseitige, dachpfannenseitige freie Ende des Befestigungselementes (2) in eine die Breite (23) des mittleren Abdeckbereiches (4) der Dachpfanne (1) - im oberen Viertel der Dachpfanne (1) - parallel zur x-Achse überstreichende Führungsschiene (18) reversibel oder Irreversibel eingreifen.

Dies führt zu dem erheblichen Vorteil, dass das erfindungsgemäß zum Einsatz kommende Befestigungselement (2) zur optimalen Positionierung exakt oberhalb der Mitte eines tragenden Bestandteiles der Dachunterkonstruktion, beispielsweise eines Sparrens (8), seitwärts verschiebbar ist.

Figur 7 zeigt, dass in diesem Falle in dem firstseitigen, dachpfannenseitigen freien Ende des Befestigungselementes (2) von beiden Seiten ausgehende Schlitze (19) ausgebildet sein können.

Die firstseits vor diesen Schlitzen (19) befindlichen freien Enden (20) des Befestigungselementes (2) können dann - zum reversiblen oder Irreversiblen Eingriff in die x-Achsen-Führungsschiene (18), welche einen auf dem Kopfe stehenden Buchstaben U entsprechenden Querschnitt aufweist - zumindest etwas nach oben aufgebogen sein.

In einer nicht beanspruchten alternativen Ausführungsform der Dachpfanne (1) kann - zur entlang der x-Achse variablen Positionierung des Befestigungselementes (2) auf der Oberseite des mittleren Abdeckbereiches (4) der Dachpfanne (1) - das Befestigungselement (2) entlang einer über die Breite des mittleren Abdeckbereichs (4) der Dachpfanne (1) parallel zur x-Achse im oberen Viertel der Dachpfanne (1) verlaufenden Anschlagleiste oder entlang eines durch den oberen Rand (6) des mittleren Abdeckbereiches (4) der Dachpfanne (1) gebildeten und in x-Richtung verlaufenden Anschlages (21) in x-Richtung frei verschiebbar auf der Oberfläche des mittleren Abdeckbereichs (4) der Dachpfanne (1) reversibel positionierbar und anschließend ortsfest anbringbar sein.

Alternativ hierzu können im Falle einer nicht beanspruchten Dachpfanne (1) - zur entlang der x-Achse oder der x-Achse und der y-Achse variablen Positionierung des Befestigungselementes (2) auf der Oberseite des mittleren Abdeckbereiches (4) der Dachpfanne (1) - über die gesamte x-Breite oder x-Breite und y-Länge des mittleren Abdeckbereichs (4) der Dachpfanne (1) Einhängeeinrichtungen, Einrasteinrichtungen, Einclipseinrichtungen, Einsteckeinrichtungen oder Einschraubeinrichtungen für die Positionierung des Befestigungselementes (2) exakt oberhalb des tragenden Bauteiles einer Dachunterkonstruktion vorgesehen sein, wobei das Befestigungselement (2) zu diesen Einrichtungen vorzugsweise korrespondierend ausgestaltet sein kann.

Alternativ hierzu kann im Falle einer nicht beanspruchten Dachpfanne (1) - zur entlang der x-Achse oder der x-Achse und der y-Achse variablen Positionierung des Befestigungselementes (2) auf der Oberseite des mittleren Abdeckbereiches (4) der Dachpfanne (1) - die Oberseite des mittleren Abdeckbereiches (4) der Dachpfanne (1) vollständig oder abschnittsweise oder punktförmig ein Klettverschlussmaterial tragen.

In diesem Falle kann der dachpfannenseitige Abschnitt des Befestigungselementes (2) und/oder die Montageplatte (22) des Befestigungselementes (2) - jeweils auf ihrer der Dachpfanne (1) in der Gebrauchsstellung zugewandten Seite - vollständig oder abschnittsweise oder punktförmig ein korrespondierend ausgestaltetes Klettverschlussmaterial tragen.

Alternativ hierzu können im Falle einer nicht beanspruchten Dachpfanne (1) - zur entlang der x-Achse oder der x-Achse und der y-Achse variablen Positionierung des Befestigungselementes (2) auf der Oberseite des mittleren Abdeckbereiches (4) der Dachpfanne (1) - auf dem dachpfannenseitigen Abschnitt des Befestigungselementes (2) - jeweils auf der in der Gebrauchsstellung der Dachpfanne (1) zugewandten Seite - vollständig oder abschnittsweise oder punktförmig ein doppelseitig klebendes Klebeband oder eine Klebstoffbeschichtung vorgesehen sein.

Alternativ hierzu kann im Falle einer nicht beanspruchten Dachpfanne (1) - zur entlang der x-Achse oder der x-Achse und der y-Achse variablen Positionierung des Befestigungselementes (2) auf der Oberseite des mittleren Abdeckbereiches (4) der Dachpfanne (1) - das Befestigungselement (2) auf der Oberseite des mittleren Abdeckbereichs (4) der Dachpfanne (1) mittels Magnetismus reversibel positionierbar und anschließend ortsfest befestigbar sein.

Alternativ hierzu können im Falle einer nicht beanspruchten Dachpfanne (1) - zur entlang der x-Achse oder der x-Achse und der y-Achse variablen Positionierung des Befestigungselementes (2) auf der Oberseite des mittleren Abdeckbereiches (4) der Dachpfanne (1) - die Unterseite des der Dachpfanne (1) zugewandten Abschnittes des Befestigungselementes (2) oder die der Dachpfanne (1) zugewandte Unterseite der Montageplatte (22) des Befestigungselementes (2) einen oder mehrere Saugnäpfe zur reversiblen Positionierung des Befestigungselementes (2) auf der Oberseite des mittleren Abdeckbereichs (4) der Dachpfanne (1) tragen.

Zusammenfassend ist festzustellen, dass im Rahmen der vorliegenden Erfindung eine Dachpfanne (1) mit einem auf deren äußerer Oberfläche reversibel und variabel positionierbarem und anschließend ortsfest anbringbaren Befestigungselement (2) für Dachaufbauten bereitgestellt wird.

Die Montage der erfindungsgemäßen Dachpfanne (1) umfasst lediglich folgende drei Schritte: 1. Eine bereits vorhandene Dachpfanne wird gegen die erfindungsgemäße Dachpfanne (1) an nächstliegender Stelle zum Sparren (8) ausgetauscht. 2. Nach der reversiblen Positionierung des Befestigungselementes (2) exakt über der Sparrenmitte wird das Befestigungselement (2) durch die erfindungsgemäße Dachpfanne (1) hindurch am Sparren (8) mit Verbindungselementen (25) [zum Beispiel mittels zweier VA-Tellerkopf-Schrauben] befestigt. 3. Anschließend wird die obere und gegebenenfalls die seitliche Dachpfanne wieder eingedeckt.

Aus diesem Grunde ist die Montage der erfindungsgemäßen Dachpfanne (1) besonders schnell, einfach und bequem.

Ein besonderer Vorteil der erfindungsgemäßen Dachpfanne (1) besteht darin, dass sie Dauerhaltbarkeitsprobleme nicht kennt. Denn bei ihr stützt sich - im scharfen Gegensatz zu den Dachhaken des Standes der Technik - kein Bauteil auf der traufenseitig vorgesehenen Dachpfanne selbst bei ausgeprägter Gewichtsbelastung ab. Die Gefahr eines Bruches dieser Dachpfanne durch unzulässige Lasteinleitung bei Belastung durch Wind oder Schnee wird daher sicher ausgeschlossen. Schließlich entfallen die aus dem Stand der Technik bekannten Montagebügel, über welche eine erhebliche Druckbelastung auf die Dachpfannen eingeleitet wurde, so dass diese nach länger dauerndem Betrieb - insbesondere unter Schneelast oder Winddruck - brechen konnten.

Zumal im Falle der erfindungsgemäßen Dachpfanne (1) eine separate Ankerplatte für das Befestigungselement (2) nicht erforderlich ist, kann die erfindungsgemäße Dachpfanne (1) schon aus denkgesetzlichen Gründen das Problem einer zu geringen Biegesteifigkeit einer Ankerplatte nicht kennen.

Im übrigen verfügt das Befestigungselement (2) der erfindungsgemäßen Dachpfanne (1) über eine in besonderem Maße ausgeprägte Biegesteifigkeit, da es lediglich über zwei Kraftumlenkungspunkte verfügt und nicht wie die Ankerhaken des Standes der Technik vier Kraftumlenkungspunkte aufweisen.

Ein weiterer gravierender Vorteil der erfindungsgemäßen Dachpfanne (1) ist darin zu sehen, dass insbesondere für die Herstellung des Befestigungselementes (2) deutlich geringere Materialmengen zum Einsatz kommen, da das erfindungsgemäße Befestigungselement - aufgrund seiner konstruktionsbedingten Biegesteifigkeit eine - dünnwandige Ausbildung gestattet. Aufgrund dieser Materialersparnis ist die Herstellung der erfindungsgemäßen Dachpfanne (1) mit ihrem Befestigungselement (2) ausgesprochen kostengünstig.

Schließlich ist die erfindungsgemäße Dachpfanne (1) deswegen vorteilhaft, weil sie eine spezielle, aufwendige Montage und/oder eine besonders lange und folglich materialintensive und kostenintensive Ausbildung einer Ankerplatte selbst im Falle eines nicht-zentrischen Sitzes der Dachpfanne über der Sparrenmitte nicht erfordert.

Ein weiterer wesentlicher Vorteil der erfindungsgemäßen Dachpfanne (1) besteht darin, dass deren Montage mühsame und zeitintensive Reinigungsarbeiten am Dach und am Boden zur Entfernung von Dachpfannen-Splittern nicht zur Folge hat.

## Patentansprüche

1. Dachpfanne (1) mit einem oder mehreren auf deren äußerer Oberfläche anbringbaren Befestigungselementen (2) für Dachaufbauten, wobei das Befestigungselement (2) auf der äußeren Oberfläche des mittleren Abdeckbereichs (4) der Dachpfanne (1) entlang der x-Achse und damit seitlich, oder entlang der x-Achse und entlang der sich in First-Traufe-Richtung erstreckenden y-Achse an beliebiger Position reversibel oder irreversibel positionierbar ist und anschließend durch ein oder mehrere Verbindungselemente (25), welche auch die Dachpfanne (1) durchragen, an einem oder mehreren tragenden Teilen einer Dachunterkonstruktion ortsfest anbringbar ist, wobei das firstwärtige, dachpfannenseitige freie Ende des Befestigungselementes (2) in eine die Breite (23) des mittleren Abdeckbereiches (4) der Dachpfanne (1) parallel zur x-Achse überstreichende Führungsschiene (18) reversibel oder irreversibel eingreift, so dass das Befestigungselement (2) zur Positionierung exakt oberhalb der Mitte eines tragenden Bestandteiles der Dachunterkonstruktion seitwärts verschiebbar ist, und die beiden seitlichen Randbereiche (5) der Dachpfanne (1) zur Gewährleistung einer problemlosen Austauschbarkeit gegen eine bereits vorhandene Dachpfanne (1) durch Falzung oder Bördelung derart ausgestaltet ist, dass sie den seitlichen Randbereich herkömmlicher Dachpfannen korrespondierend nachempfunden sind, **dadurch gekennzeichnet,**
**dass** die Breite (23) des mittleren Abdeckbereichs (4) der Dachpfanne (1) im Bereich von 60 % bis 97 % der Gesamtbreite (24) der Dachpfanne (1) liegt, und der mittlere Abdeckbereich (4) der Dachpfanne (1), bei Betrachtungen entlang der x-Achse und der y-Achse eben, glatt und gerade ist, wobei die Führungsschiene (18) die Breite (23) des mittleren Abdeckbereiches (4) im oberen Viertel der Dachpfanne (1) parallel zur x-Achse überstreicht.

2. Dachpfanne (1) nach einem der vorhergehenden Ansprüche, **dadurch gekennzeichnet, dass** auf der Unterseite (13) sowie im oberen Drittel der Gesamtlänge (14) der Dachpfanne (1) eine sich vollständig oder abschnittsweise über die Gesamtbreite (24) der Dachpfanne (1) erstreckende und parallel zur x-Achse verlaufende Positionierhilfe (12) zum mittelbaren oder unmittelbaren Einhängen der Dachpfanne (1) an der oberen Außenkante (15) einer Dachlatte (11) ortsfest vorsehbar ist.

3. Dachpfanne (1) nach einem der vorhergehenden Ansprüche, **dadurch gekennzeichnet, dass** die Dachpfanne (1) einen entlang der x-Achse ebenen und geraden mittleren Abdeckbereich (4) umfasst, die beiden seitlichen Ränder (5) sowie der obere Rand (6) und/oder der untere Rand (7) der Dachpfanne (1) zur Anpassung der Dachpfanne (1) an die Randbereiche der benachbarten Dachpfannen jeweils einfach oder mehrfach gefalzt, geprägt, gewölbt, gekrümmt, gebogen und/oder ausgeschnitten sind.

4. Dachpfanne (1) nach einem der vorhergehenden Ansprüche, **dadurch gekennzeichnet, dass** die Form des Befestigungselementes (2) - bei seitlicher Betrachtung in Gebrauchsstellung - einem zur Seite gekippten Buchstaben "U", dessen Öffnung in Richtung des Dach-Firstes ausgerichtet ist oder einem Buchstaben "L" oder einem Buchstaben "C" entspricht, wobei der dem mittleren Abdeckbereich (4) der Dachpfanne (1) zugewandte Abschnitt des Befestigungselementes (2) oder eine an diesem Abschnitt des Befestigungselementes (2) angebrachte Montageplatte (22) eine oder mehrere Aussparungen (16) zur Hindurchführung eines oder mehrerer zu der tragenden Dachunterkonstruktion reichenden Verbindungselemente (25) aufweist, wobei der dem mittleren Abdeckbereich (4) der Dachpfanne (1) abgewandte Abschnitt des Befestigungselementes (2) eine oder mehrere Aussparungen (26) zur Anbringung von Dachzubehörelementen aufweist, wobei die geometrischen Schwerpunkte der Aussparungen (16) und der einen oder mehreren Aussparungen (26) - bei seitlicher Betrachtung in der Gebrauchsstellung - exakt einander gegenüberliegen oder zueinander geringfügig versetzt sind und wobei die Unterseite des dem mittleren Abdeckbereich (4) der Dachpfanne (1) zugewandten Abschnittes des Befestigungselementes (2) oder der Montageplatte (22) des Befestigungselementes (2) ein pastöses, mattenförmiges, streifenförmiges oder punktförmiges Flüssigkeits-Dichtmaterial oder -mittel (28) trägt.

5. Dachpfanne (1) nach einem der vorhergehenden Ansprüche, **dadurch gekennzeichnet, dass** zum Schutz vor Regenwasser, Schnee und Tropfwasser oberhalb von der oder den Aussparungen (16) des Befestigungselementes (2) oder der Montageplatte (22) des Befestigungselementes (2) für die eine oder die mehreren Verbindungselemente (25) eine ein- oder mehrteilige Abdeckplatte vorsehbar ist, welche den oder die Köpfe der Verbindungselemente (25) überdeckt und an dem Befestigungselement (2) und/oder an der Dachpfanne (1) und/oder an dem mittleren Abdeckbereich (4) der Dachpfanne (1) und/oder an der sich parallel zur x-Achse erstreckenden Führungsschiene (18) für das Befestigungselement (2) und/oder an dem sich parallel zur x-Achse erstreckenden Anschlagelement für das Befestigungselement (2) reversibel oder irreversibel anbringbar ist oder einen Bestandteil der Dachpfanne (1) darstellt.

6. Dachpfanne (1) nach einem der vorhergehenden Ansprüche, **dadurch gekennzeichnet, dass** der zur Anbringung der Dachpfanne (1) vorgesehene Bereich der Dachlatte (11) eine Verstärkung (17) trägt, welche zumindest die beiden Kanten der Dachlatte (11) zwischen der Oberseite der Dachlatte (11) einerseits und der firstseitigen Außenseite der Dachlatte (11) und der traufenseitigen Außenseite der Dachlatte (11) andererseits überdeckt, und zwar zum Schutze der Dachlatte (11) vor einer Beschädigung durch die Verbindungselemente (25) sowie zur Verbesserung des Aufsitzens der Positionierhilfe (12) auf der oberen, firstseitigen Außenkante (15) der Dachlatte (11), wobei diese Verstärkung (17) die Dachlatte (11) in dem Auflagebereich der Dachpfanne (1) vollständig oder abschnittsweise oder käfigförmig durchbrochen ummantelt.

7. Dachpfanne (1) nach einem der vorhergehenden Ansprüche, **dadurch gekennzeichnet, dass** die Höhe (27) des Befestigungselementes (2) aufgrund einer mehrteiligen Ausbildung des Befestigungselementes (2) in z-Richtung reversibel verstellbar ist.

8. Dachpfanne (1) nach einem der vorhergehenden Ansprüche, **dadurch gekennzeichnet, dass** in dem firstseitigen, dachpfannenseitigen freien Ende des Befestigungselementes (2) von beiden Seiten ausgehende Schlitze (19) ausgebildet sind und die firstseits vor diesen Schlitzen (19) befindlichen freien Enden (20) des Befestigungselementes (2) - zum reversiblen oder irreversiblen Eingriff in die x-Achsen-Führungsschiene (18), welche einen auf dem Kopfe stehenden Buchstaben U entsprechenden Querschnitt aufweist - zumindest etwas nach oben aufgebogen sind.

## Claims

1. A roof tile (1) having one or a plurality of fastening elements (2) that can be affixed to the outer surface of said tile for roof superstructures, wherein the fastening element (2) is reversibly or irreversibly positionable in any position on the outer surface of the middle covering region (4) of the roof tile (1) along the x-axis and thus laterally, or along the x-axis and along the y-axis extending in the ridge-eave direction and can then be fixed on one or a plurality of bearing parts of a roof substructure by means of one or a plurality of connecting elements (25), which also pass through the roof tile (1), wherein the ridgeward, roof tile-side free end of the fastening element (2) engages reversibly or irreversibly in a guide track (18) spanning the width (23) of the middle covering region (4) of the roof tile (1) parallel to the x-axis such that the fastening element (2) is laterally slidable for positioning exactly over the middle of a bearing component of the roof substructure, and the two lateral edge regions (5) of the roof tile (1), to ensure problem-free interchangeability with an existing roof tile (1), are designed by folding or crimping in such a way that they correspond to the lateral edge region of standard roof tiles, **characterized in that** the width (23) of the middle covering region (4) of the roof tile (1) is in the range of 60 % to 97 % of the overall width (24) of the roof tile (1) and that the middle covering region (4) of the roof tile (1), when viewed along the x-axis and the y-axis, is level, smooth, and straight, wherein the guide track (18) spans the width (23) of the middle covering region (4) in the upper quarter of the roof tile (1) parallel to the x-axis.

2. The roof tile (1) according to any one of the preceding claims, **characterized in that** a positioning aid (12) for hooking the roof tile (1) directly or indirectly on the upper outside edge (15) of a roof batten (11) can be fixed on the underside (13) and in the upper third of the overall length (14) of the roof tile (1), said positioning aid extending entirely or in sections over the overall width (24) of the roof tile (1) and running parallel to the x-axis (12).

3. The roof tile (1) according to any one of the preceding claims, **characterized in that** the roof tile (1) comprises a middle covering region (4), which is level and straight along the x-axis, and that the two lateral edges (5) as well as the upper edge (6) and/or the bottom edge (7) of the roof tile (1) are each singly or multiply folded, stamped, domed, curved, bent and/or cut out in order to adapt the roof tile (1) to the edge regions of the adjacent roof tiles.

4. The roof tile (1) according to any one of the preceding claims, **characterized in that** the shape of the fastening element (2) - when viewed from the side in the use position - corresponds to a sideways tilted "U", the opening of which is oriented toward the roof ridge, or to an "L" or to a "C", wherein the section of the fastening element (2) facing the middle covering region (4) of the roof tile (1), or a mounting plate (22) affixed to this section of the fastening element (2), has one or a plurality of cutouts (16) for the passage of one or a plurality of connecting elements (25) extending to the bearing roof substructure, wherein the section of the fastening element (2) facing away from the middle covering region (4) of the roof tile (1) has one or a plurality of cutouts (26) for affixing roof accessory elements, wherein the geometric foci of the cutouts (16) and of the one or plurality of cutouts (26) - when viewed from the side in the use position - are exactly opposite one another or slightly offset in relation to one another and wherein the underside of the section of the fastening element (2) facing the middle covering region (4) of the roof tile (1) or of the mounting plate (22) of the fastening element (2) bears a pasty, mat-like, strip-shaped or punctiform liquid sealing material or agent (28).

5. The roof tile (1) according to any one of the preceding claims, **characterized in that**, for protection from rainwater, snow and dripping water, a one-piece or multi-piece cover plate for the one or plurality of connecting elements (25) can be provided over the cutouts (16) of the fastening element (2) or of the mounting plate (22) of the fastening element (2), which plate covers the head or heads of the connecting elements (25) and can be affixed reversibly or irreversibly to the fastening element (2) and/or to the roof tile (1) and/or to the middle covering region (4) of the roof tile (1) and/or to the guide track (18) for the fastening element (2) running parallel to the x-axis, or said cover plate constitutes a component of the roof tile (1).

6. The roof tile (1) according to any one of the preceding claims, **characterized in that** the region of the roof batten (11) provided for affixing the roof tile (1) bears a reinforcement (17), which covers at least the two edges of the roof batten (11) between the upper side of the roof batten (11) on one hand and the ridge-side outer side of the roof batten (11) and the eave-side outer side of the roof batten (11) on the other hand, namely for protecting the roof batten (11) from being damaged by the connecting elements (25) and for improving the seating of the positioning aid (12) on the upper, ridge-side outer edge (15) of the roof batten (11), wherein this reinforcement (17) encases the roof batten (11) completely or in sections or in an open, cage-like manner in the contact region of the roof tile (1).

7. The roof tile (1) according to any one of the preceding claims, **characterized in that** the height (27) of the fastening element (2), owing to a multipart configuration of the fastening element (2), is reversibly adjustable in the z-direction.

8. The roof tile (1) according to any one of the preceding claims, **characterized in that** slits (19) originating from both sides are formed in the ridge-side, roof tile-side free end of the fastening element (2) and that the free ends (20) of the fastening element (2) situated on the ridge side in front of these slits (19) - for reversible or irreversible engagement in the x-axis guide track (18), which has a cross section corresponding to an inverted "U" - are at least somewhat upwardly curved.

## Revendications

1. Panne de toit (1) avec un ou plusieurs éléments de fixation (2) pouvant être montés sur la surface extérieure de celle-ci pour des superstructures de toit, l'élément de fixation (2) pouvant être positionné dans une position quelconque réversible ou irréversible sur la surface extérieure de la zone de couverture centrale (4) de la panne (1) le long de l'axe x et de ce fait latéralement ou le long de l'axe x et le long de l'axe y s'étendant dans la direction faîtage-gouttière et pouvant être ensuite monté fixement sur une ou plusieurs parties porteuses d'une sous-structure de toit par un ou plusieurs éléments de liaison (25), lesquels traversent également la panne de toit (1), l'extrémité libre au faîtage, côté panne, de l'élément de fixation (2) venant en prise dans une largeur (23) de la zone de couverture centrale (4) de la panne (1) de façon réversible ou irréversible parallèlement au rail de guidage (18) couvrant l'axe x de telle sorte que l'élément de fixation (2) peut être déplacé latéralement au positionnement exactement au-dessus du centre d'un composant porteur de la sous-structure de toit et les deux zones de bordure (5) latérales de la panne (1) étant structurées pour garantir une interchangeabilité facile contre une panne de toit (1) déjà existante par pliage ou bordage de telle sorte qu'elles recréent la zone de bordure latérale correspondant aux pannes d'origine, **caractérisée** en ce la largeur (23) de la zone de couverture centrale (4) de la panne (1) se situe dans une plage de 60 % à 97 % de la largeur totale (24) de la panne (1) et la zone de couverture centrale (4) de la panne (1), considérée le long de l'axe x et de l'axe y, est plane, lisse et droite, le rail de guidage (18) couvrant la largeur (23) de la zone de couverture centrale (4) dans le quart supérieur de la panne (1) parallèlement à l'axe x.

2. Panne de toit (1) selon la revendication précédente, **caractérisée en ce que** sur la face inférieure (13) et dans le tiers supérieur de la longueur totale (14) de la panne (1), une aide de positionnement (12) s'étendant complètement ou par secteurs sur la largeur totale (24) de la panne (1) et passant parallèlement à l'axe x peut être prévue de manière fixe pour l'accrochage indirect ou direct de la panne (1) au bord extérieur supérieur (15) d'une latte de toit (11).

3. Panne de toit (1) selon l'une quelconque des revendications précédentes, **caractérisée en ce que** la panne (1) comprend une zone de couverture centrale (4) plane et droite le long de l'axe x, les deux bords latéraux (5) ainsi que le bord supérieur (6) et/ou le bord inférieur (7) de la panne (1) étant respectivement repliés, estampés, gaufrés, bombés, courbés, pliés et/ou découpés une ou plusieurs fois pour adapter la panne (1) aux zones de bordure des pannes voisines.

4. Panne de toit (1) selon l'une quelconque des revendications précédentes, **caractérisée en ce que** la forme de l'élément de fixation (2), considérée latéralement en position d'utilisation, correspond à une lettre « U » basculée sur le côté, dont l'ouverture est orientée en direction du faîtage de toit ou à une lettre « L » ou une lettre « C », la section de l'élément de fixation (2) tournée vers la zone de couverture centrale (4) de la panne (1) ou une plaque de montage (22) montée sur cette section de l'élément de fixation (2) comportant un ou plusieurs évidements (16) pour faire passer à travers un ou plusieurs éléments de liaison (25) atteignant la structure de toit porteuse, la section de l'élément de fixation (2) opposée à la zone de couverture centrale (4) de la panne (1) comportant un ou plusieurs évidements (26) pour monter des éléments accessoires de toit, les centres de gravité géométriques des évidements (16) et du ou de plusieurs évidements (26), considérés latéralement en position d'utilisation, sont exactement opposés l'un à l'autre ou légèrement l'un par rapport à l'autre et la face inférieure de la section de l'élément de fixation (2) tournée vers la zone de couverture centrale (4) de la panne (1) ou la plaque de montage (22) de l'élément de fixation (2) portant un matériau ou agent d'étanchéité liquide pâteux (28), en forme de nattes, de bandes ou de points.

5. Panne de toit (1) selon l'une quelconque des revendications précédentes, **caractérisée en ce que** pour la protection contre l'eau de pluie, la neige et l'eau d'égouttement, une plaque de couverture en une ou plusieurs parties peut être prévue au-dessus du ou des évidements (16) de l'élément de fixation (2) ou de la plaque de montage (22) de l'élément de fixation (2) pour un ou plusieurs éléments de liaison, laquelle recouvre la ou les têtes des éléments de liaison (25) et peut être montée de façon réversible ou irréversible sur l'élément de fixation (2) et/ou sur la panne (1) et/ou sur la zone de couverture centrale (4) de la panne (1) et/ou sur le rail de guidage (18) s'étendant parallèlement à l'axe x pour l'élément de fixation (2) et/ou sur l'élément de butée s'étendant parallèlement à l'axe x pour l'élément de fixation (2) ou représente un composant de la panne de toit (1).

6. Panne de toit (1) selon l'une quelconque des revendications précédentes, **caractérisée en ce que** la zone de la latte de toit (11) prévue pour monter la panne (1) porte un renfort (17), lequel recouvre au moins les deux bords de la latte de toit (11) entre la face supérieure de la latte de toit (11) d'une part et la face extérieure de la latte de toit (11) côté faîtage et la face extérieure de la latte de toit (11) côté gouttière d'autre part et de ce fait pour la protection de la latte de toit (11) contre un endommagement par les éléments de liaison (25) ainsi que pour améliorer la pose de l'aide de positionnement (12) sur le bord extérieur (15) supérieur, côté faîtage de la latte de toit (11), ce renfort (17) enveloppant complètement ou par secteurs ou en forme de cage de façon ajourée la latte de toit (11) dans la zone d'appui de la panne de toit (1).

7. Panne de toit (1) selon l'une quelconque des revendications précédentes, **caractérisée en ce que** la hauteur (27) de l'élément de fixation (2) peut être réglée de façon réversible dans la direction z en raison d'une conception en plusieurs parties de l'élément de fixation (2).

8. Panne de toit (1) selon l'une quelconque des revendications précédentes, **caractérisée en ce que** dans l'extrémité libre côté faîtage, du côté de la panne de l'élément de fixation (2) des fentes (19) sortant des deux côtés sont constituées et les extrémités (20) libres de l'élément de fixation (2), côté faîtage se trouvant devant ces fentes (19) sont ouvertes au moins un peu près vers le haut, pour l'engagement réversible ou irréversible dans le rail de guidage d'axe x (18), lequel comporte une section correspondant à la lettre U se trouvant sur la tête.
